(19) Europäisches Patentamt
European Patent Office
Office européen des brevets

(11) Veröffentlichungsnummer: **0 264 755 B1**

(12) **EUROPÄISCHE PATENTSCHRIFT**

(45) Veröffentlichungstag der Patentschrift: **10.04.91**

(51) Int. Cl.$^5$: **C08G 69/40**, C10G 33/04, B01D 17/04

(21) Anmeldenummer: **87114834.2**

(22) Anmeldetag: **10.10.87**

(54) **Alkoxylierte amidgruppenhaltige Polyamine und deren Verwendung zum Brechen von Öl-in-Wasser- und Wasser-in-Öl-Emulsionen.**

(30) Priorität: **16.10.86 DE 3635235**

(43) Veröffentlichungstag der Anmeldung:
**27.04.88 Patentblatt 88/17**

(45) Bekanntmachung des Hinweises auf die Patenterteilung:
**10.04.91 Patentblatt 91/15**

(84) Benannte Vertragsstaaten:
**AT BE DE FR GB IT NL**

(56) Entgegenhaltungen:
**DE-A- 3 300 866**
**DE-C- 907 701**

(73) Patentinhaber: **BASF Aktiengesellschaft**
**Carl-Bosch-Strasse 38**
**W-6700 Ludwigshafen(DE)**

(72) Erfinder: **Barthold, Klaus, Dr.**
**Paulusbergstrasse 4**
**W-6800 Mannheim 51(DE)**
Erfinder: **Baur, Richard, Dr.**
**Nelkenstrasse 1**
**W-6704 Mutterstadt(DE)**
Erfinder: **Fikentscher, Rolf, Dr.**
**Von-Stephan-Strasse 27**
**W-6700 Ludwigshafen(DE)**
Erfinder: **Lasowski, Jürgen, Dr.**
**Karl-Raeder-Strasse 3**
**W-6703 Limburgerhof(DE)**
Erfinder: **Oppenlaender, Knut, Dr.**
**Otto-Dill-Strasse 23**
**W-6700 Ludwigshafen(DE)**

**EP 0 264 755 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue als Rohöldemulgatoren geeignete Verbindungen, basierend auf alkoxylierten amidgruppenhaltigen Polyaminen und ihre Verwendung zum Brechen von öl-in-Wasser- und Wasser-in-öl-Emulsionen.

Bei der Förderung und Weiterverarbeitung von Rohöl fallen in großen Mengen Wasser-in-öl- und öl-in-Wasser-Emulsionen an, wobei die kontinuierliche äußere Phase von den Mengenverhältnissen Wasser zu öl, dem Emulgatorsystem und der Entstehungsgeschichte der Emulsion abhängt. Bei der Förderung fällt der größte Teil des Rohöls als Wasser-in-öl-Emulsion an und muß durch Zugabe chemischer Demulgatoren gespalten werden. Weitverbreitet als Demulgatoren sind Ethylenoxid/Propylenoxid-Blockcopolymere, alkoxylierte Alkylphenolformaldehydharze, alkoxylierte Polyamine und Derivate dieser Grundklassen. Typische Vertreter dieser Klassen werden in der französischen Patentschrift 10 69 615, der US-Patentschrift 24 99 368 und der deutschen Patentschrift 22 27 546 beschrieben. Aus DE-A-33 00 866 sind weiter oxalkylierte Polyamidoamine bekannt, die durch Umsetzung von Polyaminen mit Caprolactam und Alkoxylierung mit Alkylenoxiden erhalten werden.

Öl-in-Wasser-Emulsionen treten ebenfalls bei der Förderung, hauptsächlich jedoch während der Weiterverarbeitung des Rohöls auf den Feldern und in den Raffinerien auf. Die Menge an emulgiertem Rohöl kann bis zu 5 % betragen. Zur Abtrennung dieses Restölgehaltes werden spezielle Demulgatoren, sogenannte Deoiler, verwendet, wobei es sich meist um kationische Polymere handelt, wie sie z.B. in DE-34 04 538 beschrieben werden. Typische Produkte werden ebenfalls in der US-Patentschrift 35 28 928 beschrieben.

Es wurde nun gefunden, daß oxalkylierte, amidgruppenhaltige Polyamine, erhältlich durch Kondensation von Dicarbonsäuren mit 3 bis 20 Kohlenstoffatomen oder deren funktionellen Derivaten mit Polyalkylenpolyaminen mit mindestens 2 (4 soferne die basischen tertiären stickstoffatome der alkoxylate nicht mindestens teilweise alkyliert sind) Kohlenstoffatomen und mindestens 2 (3 Soferne die basischen tertiären Stickstoffatome der alkoxylate nicht mindestens teilweise alkyliert sind) Aminogruppen und Umsetzung des Reaktionsproduktes mit insgesamt 1 bis 200 Mol Ethylenoxid und/oder Propylenoxid und/oder 1,2-Butylenoxid pro Mol Polyalkylenpolyamin und gegebenenfalls Alkylierung der tertiären Stickstoffatome hochwirksame Demulgatoren für öl-in-Wasser- und Wasser-in-öl-Emulsionen sind, die an universeller Anwendbarkeit, Spaltgeschwindigkeit und Restöl- bzw. Rest-wassergehalt den bekannten Demulgatoren überlegen sind.

In DE-C-907 701 sind zwar bereits Alkoxylierungsprodukte von Umsetzungsprodukten aus Dicarbonsäuren und Diaminen bekannt, die jedoch als Klebstoffe oder Weichmacher für Kunststoffe verwendet werden.

Bevorzugt und besonders wirksam als Rohöldemulgatoren sind oxalkylierte amidgruppenhaltige Polyamine, erhältlich durch Kondensation von Dicarbonsäuren der Formel

$$HOOC-R-COOH \qquad (I),$$

in der R den zweiwertigen Rest eines Alkans oder Alkens mit 1 bis 17 C-Atomen oder einen gegebenenfalls substituierten Phenylenrest bedeutet, mit Polyalkylenpolyaminen der Formel

$$H_2N-\left[CH_2-\underset{R^1}{\underset{|}{CH}}-\left[CH_2\right]_y-\underset{H}{\underset{|}{N}}\right]_x-H \qquad (II),$$

in der $R^1$ Wasserstoff oder Methyl, y die Werte 1 oder 0 und x die Werte 1 bis 5 bedeutet.

In diesen oxalkylierten amidgruppenhaltigen Polyaminen können die basischen tertiären N-Atome schließlich noch teilweise oder vollständig alkyliert sein.

Die Herstellung der neuen oxalkyierten, amidgruppenhaltigen Polyamine erfolgt zweckmäßig, indem man

a) Dicarbonsäuren mit 3 bis 20 Kohlenstoffatomen, oder deren funktionelle Derivate mit Polyaminen mit 2 (4 im Falle, daß die maßnahme c) nicht durchgeführt wird) bis 20 Kohlenstoffatomen und 2 (3 im Falle, daß die maßnahme c) nicht durchgeführt wird) bis 5 Stickstoffatomen bei 100 bis 300° eventuell unter Entfernung des Reaktionswassers kondensiert,

b) das Reaktionsprodukt mit 1 bis 200 Mol, bezogen auf 1 Mol des Polyamins an Ethylenoxid, Propylenoxid oder 1,2-Butylenoxid in Gegenwart alkalischer Katalysatoren bei Temperaturen von 110 bis 140°C alkoxyliert und gegebenenfalls

c) die basischen tertiären Stickstoffatome der Alkoxylate teilweise oder vollständig alkyliert.

Die Kondensation der Polyamine mit den Dicarbonsäuren erfolgt nach Methoden, wie sie z.B. in

deutschen Patentschrift DE 11 77 824, 17 71 814 und 27 56 469 angegeben sind. Als Dicarbonsäuren, bzw. deren funktionelle Derivate kommen insbesondere solche der allgemeinen Formel III

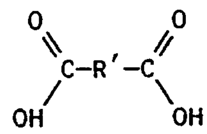

III

in Betracht, in der R′ den Rest

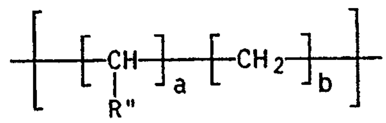

oder

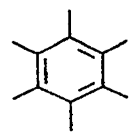

oder

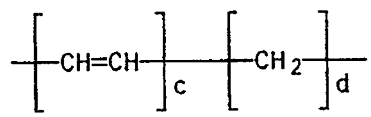

bedeutet, wobei
R″ für H, $CH_3$, OH
a für die Zahlen 0 bis 5
b für die Zahlen 0 bis 15,
wobei a + b mindestens 1 ist, steht
c die Zahlen 1 oder 2 und
d die Zahlen 0 bis 3 bedeutet und wobei der Phenylenrest durch OH-substituiert sein kann, die man mit Polyalkylenpolyaminen der allgemeinen Formel IV

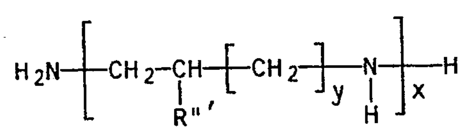

IV,

in der R‴ für H oder $CH_3$ steht und y die Zahlen 1 oder 0 und x die Zahlen 1 bis 5 bedeutet, im Verhältnis 1:0,8 bis 1,4, bevorzugt 1:1 bis 1:1,1 kondensiert.

Im einzelnen sind als Dicarbonsäuren der allgemeinen Formel III bzw. deren funktionelle Derivate Bernsteinsäure, Glutarsäure, Adipinsäure, Maleinsäure, Fumarsäure, Diglykolsäure, Terephthalsäure und Isophthalsäure zu nennen.

Als Polyalkylenpolyamine der allgemeinen Formel IV kommen insbesondere Ethylendiamin, Propylendiamin-1,2, Propylendiamin-1,3, Diethylentriamin, Dipropylentriamin, Triethylentetramin, deren Gemische und die bei der Synthese der Polyalkylenpolyamine verbleibenen Rückstände in Betracht.

Die Herstellung der amidgruppenhaltigen Polyamine gelingt nach an sich bekannten Verfahren durch Kondensation der Dicarbonsäuren, bzw. deren Derivaten und den Polyalkylenpolyaminen gegebenenfalls unter Entfernung des Reaktionswassers bei Temperaturen von 100 bis 300 °C unter Ausschluß von Sauerstoff.

Durch Oxalkylierung der amidgruppenhaltigen Polyamine mit Ethylenoxid und/oder Propylenoxid und/oder 1,2-Butylenoxid blockweise oder als Mischoxid werden Verbindungen der allgemeinen Formel V erhalten

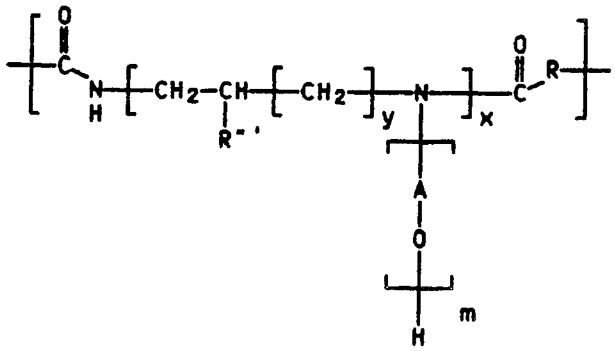

V

in der m die Zahlen 1 bis 200 bedeutet und A-O für gleiche oder verschiedene Reste von Ethylenoxid, Propylenoxid oder Butylenoxid steht und R, R''', x und y die oben genannten Bedeutungen haben. Bei der Oxalkylierung geht man nach an sich bekannten Methoden vor, wie sie z.B. in der deutschen Patentschrift DE 22 27 546 beschrieben sind.

Im einzelnen geht man beispielsweise so vor, daß man in der ersten Stufe auf das amidgruppenhaltige Polyamin in Gegenwart von 1 bis 50 Gew.% Wasser in einem Druckgefäß bei ca. 80 bis 100 °C so viel Alkylenoxid einwirken läßt, daß unter Umsetzung sämtlicher sekundärer Aminogruppen der entsprechende Aminoalkohol entsteht. Nach Entfernung des Wassers, gegebenenfalls unter vermindertem Druck, werden in Gegenwart bekannter basischer Katalysatoren, bevorzugt Kalium- oder Natriumhydroxid in Mengen von 0,2 bis 5 Gew.%, bezogen auf wasserfreien Aminoalkohol der ersten stufe, das (die) gewünschte(n) Alkoxyd(e) kontinuierlich bei 110 bis 140 °C in einem Druckgefäß zudosiert. Man verwendet bevorzugt Ethylenoxid allein oder Propylenoxid allein oder Propylenoxid und Ethylenoxid, wobei Propylenoxid und Ethylenoxid als Mischung oder nacheinander unter Bildung von Polymerblöcken umgesetzt werden können. Je nach Anteil Ethylenoxid und Propylenoxid fallen die Produkte als mittel- bis hochviskose Substanzen an, die bei mittleren bis hohen Ethylenoxidgehalten wasserlöslich, bei überwiegendem Propylenoxid-Anteil wasserunlöslich sind.

Insbesondere bei Verwendung als Demulgatoren für Öl-in-Wasser-Emulsionen ist es zweckmäßig, eine Modifizierung der alkoxylierten amidgruppenhaltigen Polyamine durch Alkylierung der basischen tertiären Stickstoffatome anzuschließen. Als Alkylierungsmittel kommen Alkylhalogenide, Epichlorhydrin, Alkyljodide, Dihalogenalkane, alkylierende aromatische Halogenide, Dimethylsulfat, bevorzugt Methylchlorid, Methyljodid, Benzylchlorid, Dimethylsulfat, Epichlorhydrin und Xylylendichlorid in Betracht. Es kann eine vollständige Alkylierung sämtlicher basischer Stickstoffatome oder eine teilweise Alkylierung erfolgen. Bevorzugt ist eine 50 bi %ige Alkylierung der basischen Stickstoffatome. Die Gewichtsmengenverhältnisse von alkoxylierten amidgruppenhaltigen Polyaminen zum Alkylierungsreagenz liegen im Bereich von 1000:1 bis 1:10. Die Alkylierung kann nach bekannten Verfahren in wäßriger Lösung bei Temperaturen von 20 bis 150 °C, eventuell unter Druck erfolgen. Der Umsatz der Alkylierung läßt sich bequem durch Bestimmung der noch vorhandenen basischen Stickstoffvalenzen bestimmen.

Beispiele

A) Amidgruppenhaltige Polyamine

Die Herstellung der amidgruppenhaltigen Polyamine erfolgt nach den in den deutschen Patenten DE 11 77 824 und 17 71 814 beschriebenen Verfahren.

1) Zur Synthese eines Adipinsäure/Diethylentriamin-Polyamidamins werden 218 g (2,12 mol) Diethylentriamin mit 282 g (1,94 mol) Adipinsäure und 100 g Wasser vermischt und die Mischung langsam auf 120 °C erwärmt. Innerhalb von 2 h erhöht man die Temperatur auf 160 °C und destilliert dabei das Lösungsmittel und Reaktionswasser ab. Nach Abkühlen auf ca. 80 °C wird das Reaktionsprodukt in 500 g Wasser gelöst.

B) Alkoxylierung der amidgruppenhaltigen Polyamine

1) In einem Autoklav werden 1000 g des Kondensationsproduktes aus Beispiel A 1) vorgelegt und unter Stickstoffatomosphäre 102 g Ethylenoxid bei 90 bis 100 °C zudosiert. Das Produkt fällt als viskose wäßrige Lösung mit 54,6 % Wirkstoffgehalt an.

2) Von der Lösung aus Beispiel B 1) wird unter vermindertem Druck das Wasser abdestilliert. 500 g des erhaltenen mittelviskosen Produktes werden in einem Autoklav mit 25 g KOH versetzt und bei 120 bis 130 °C mit 4220 g Propylenoxid umgesetzt. Das Produkt fällt als hochviskose, leicht gelbe Substanz an.

3) Zu 300 g des Produktes aus Beispiel B 2) werden in einem Autoklav 7 g KOH gegeben und bei 120 °C 48 g Ethylenoxid zudosiert.

4) Von der Lösung aus Beispiel B 1) wird unter vermindertem Druck das Wasser abdestilliert. 1000 g des erhaltenen Produktes werden in einem Autoklav mit 10 g KOH versetzt und mit 685 g Ethylenoxid bei 110 bis 130°C umgesetzt. Man erhält ein wachsartiges Produkt.

C) Alkylierung der alkoxylierten amidgruppenhaltigen Polyamine aus B)

1) 500 g der wäßrigen Lösung des Produktes aus B 1) werden mit 46 g Wasser verdünnt und bei 30°C mit 130 g Dimethylsulfat innerhalb von einer Stunde versetzt. Die Temperatur wird durch Kühlung auf 30°C gehalten. Nach beendeter Zugabe läßt man noch 4 h bei 400 °C nachreagieren.

2) 430 g des Produktes aus Beispiel B 4) werden mit 430 g Wasser verdünnt und auf 40°C erwärmt. Innerhalb von einer Stunde werden 71 g Methyljodid zugetropft, wobei die Temperatur bei 40 °C gehalten wird. Anschließend erwärmt man noch 4 h auf 65 bis 70°C.

Anwendungsbeispiel

Testemulsion = Rohöl aus dem norddeutschen Raum
Wassergehalt: 50 %
Spalttemperatur: 50 °C

| Demulgator | Einsatzmenge ppm | Wasserseparation in % nach 10' | 20' | 30' | 45' | 60' | 2 h | 4 h |
|---|---|---|---|---|---|---|---|---|
| p-tert.-Butylphenol-Formaldehyd-Harz nach Beispiel 1 b US-PS 2 499 368 | 20 | 0 | 0 | 1 | 2 | 2 | 4 | 8 |
| Oxalkyliertes Polyalkylenpolyamin gemäß den Angaben DE-PS 22 27 546 | 20 | 0 | 2 | 5 | 10 | 13 | 21 | 24 |
| Demulgator des Beispiels B 3) der vorliegenden Erfindung | 20 | 2 | 12 | 31 | 47 | 73 | 98 | 99 |
| Blindwert | - | 0 | 0 | 0 | 0 | 0 | 1 | 2 |

**Ansprüche**

1. Als Rohöldemulgatoren geeignete oxalkylierte, amidgruppenhaltige Polyamine, erhältlich durch Kondensation von Dicarbonsäuren mit 3 bis 20 Kohlenstoffatomen oder deren funktionellen Derivaten mit Polyalkylenpolyaminen mit mindestens 4 Kohlenstoffatomen und mindestens 3 Aminogruppen und Umsetzung des Reaktionsproduktes mit insgesamt 1 bis 200 Mol Ethylenoxid und/oder Propylenoxid und/oder 1,2-Butylenoxid pro Mol Polyalkylenpolyamin.

2. Oxalkylierte amidgruppenhaltige Polyamine gemäß Anspruch 1, erhältlich durch Kondensation von Dicarbonsäuren der Formel

$$HOOC-R-COOH \qquad I,$$

in der R den zweiwertigen Rest eines Alkans oder Alkens mit 1 bis 17 C-Atomen oder einen gegebenenfalls substituierten Phenylenrest bedeutet, mit Polyalkylenpolyaminen der Formel

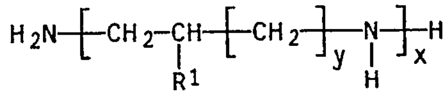

in der $R^1$ Wasserstoff oder Methyl, y die Werte 1 oder 0 und x die Werte 2 bis 5 bedeuten.

3. Oxalkylierte amidgruppenhaltige Polyamine gemäß Anspruch 1, in denen die basischen tertiären Stickstoffatome teilweise oder vollständig alkyliert sind.

4. Verfahren zur Herstellung von oxalkylierten, amidgruppenhaltigen Polyaminen gemäß Anspruch 1, dadurch gekennzeichnet, daß man
   a) Dicarbonsäuren mit 3 bis 20 Kohlenstoffatomen, oder deren funktionelle Derivate mit Polyaminen mit 4 bis 20 Kohlenstoffatomen und 3 bis 5 Stickstoffatomen bei 100 bis 300 °C, gegebenenfalls unter Entfernung des Reaktionswassers, kondensiert,
   b) das Reaktionsprodukt mit 1 bis 200 Mol, bezogen auf 1 Mol des Polyamins, Ethylenoxid, Propylenoxid oder 1,2-Butylenoxid in Gegenwart alkalischer Katalysatoren bei Temperaturen von 110 bis 140 °C alkoxyliert und gegebenenfalls
   c) die basischen tertiären Stickstoffatome der Alkoxylate teilweise oder vollständig alkyliert.

5. Verfahren zur Herstellung von oxalkylierten, amidgruppenhaltigen Polyaminen, dadurch gekennzeichnet, daß man
   a) Dicarbonsäuren mit 3 bis 20 Kohlenstoffatomen, oder deren funktionelle Derivate mit Polyaminen mit 2 bis 20 Kohlenstoffatomen und 2 bis 5 Stickstoffatomen bei 100 bis 300°C, gegebenenfalls unter Entfernung des Reaktionswassers, kondensiert,
   b) das Reaktionsprodukt mit 1 bis 200 Mol, bezogen auf 1 Mol des Polyamins, Ethylenoxid, Propylenoxid oder 1,2-Butylenoxid in Gegenwart alkalischer Katalysatoren bei Temperaturen von 110 bis 140°C alkoxyliert und
   c) die basischen tertiären Stickstoffatome der Alkoxylate teilweise oder vollständig alkyliert.

6. Alkoxylierte amidgruppenhaltige Polyamine herstellbar gemäß Anspruch 5.

7. Verwendung von oxalkylierten, amidgruppenhaltigen Polyaminen, erhältlich durch Kondensation von Dicarbonsäuren mit 3 bis 20 Kohlenstoffatomen oder deren funktionellen Derivaten mit Polyalkylenpolyaminen mit mindestens 2 Kohlenstoffatomen und mindestens 2 Aminogruppen und Umsetzung des Reaktionsproduktes mit insgesamt 1 bis 200 Mol Ethylenoxid und/oder Propylenoxid und/oder 1,2-Butylenoxid pro Mol Polyalkylenpolyamin, als Rohöldemulgatoren.

8. Verwendung von oxalkylierten amidgruppenhaltigen Polyaminen gemäß Anspruch 7, erhältlich durch Kondensation von Dicarbonsäuren der Formel

$$HOOC-R-COOH \qquad I,$$

in der R den zweiwertigen Rest eines Alkans oder Alkens mit 1 bis 17 C-Atomen oder einen gegebenenfalls substituierten Phenylenrest bedeutet, mit Polyalkylenpolyaminen der Formel

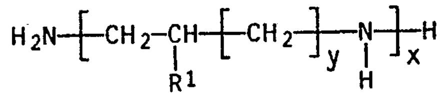

in der $R^1$ Wasserstoff oder Methyl, y die Werte 1 oder 0 und x die Werte 2 bis 5 bedeutet, als Rohöldemulgatoren.

9. Verwendung von oxalkylierten amidgruppenhaltigen Polyaminen gemäß Anspruch 7, in denen die basischen tertiären Stickstoffatome teilweise oder vollständig alkyliert sind, als Rohöldemulgatoren.

## Claims

1. An alkoxylated amido-containing polyamine which is suitable as an oil demulsifier and is obtainable by condensing a dicarboxylic acid of 3 to 20 carbon atoms or one of its functional derivatives with a polyalkylenepolyamine having 4 or more carbon atoms and 3 or more amino groups and reacting the product with a total of from 1 to 200 moles of ethylene oxide or propylene oxide or l,2-butylene oxide per mole of polyalkylenepolyamine.

2. An alkoxylated amino-containing polyamine as claimed in claim 1, obtainable by condensing a dicarboxylic acid of the formula

$$HOOC-R-COOH \qquad I$$

where R is a divalent radical of an alkane or alkene of 1 to 17 carbon atoms or an unsubstituted or substituted phenylene radical, with a polyalkylenepolyamine of the formula

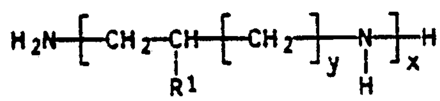

where $R^1$ is hydrogen or methyl, y is 0 or 1 and x is from 2 to 5.

3. An alkoxylated amido-containing polyamine as claimed in claim 1, wherein some or all of the basic tertiary nitrogen atoms are alkylated.

4. A process for the preparation of an alkoxylated amido-containing polyamine as claimed in claim 1, wherein
   a) a dicarboxylic acid of 3 to 20 carbon atoms, or one of its functional derivatives, is condensed with a polyamine of 4 to 20 carbon atoms and 3 to 5 nitrogen atoms at from 100 to 300 °C, with or without removal of the water of reaction,
   b) the reaction product is alkoxylated with from 1 to 200 moles of ethylene oxide, propylene oxide or 1,2-butylene oxide per mole of the polyamine, in the presence of an alkaline catalyst at from 110 to l40 °C and, if required,
   c) some or all of the basic tertiary nitrogen atoms of the alkoxylate are alkylated.

5. A process for the preparation of an alkoxylated amido-containing polyamine, wherein
   a) a dicarboxylic acid of 3 to 20 carbon atoms, or one of its functional derivatives, is condensed with

a polyamine of 2 to 20 carbon atoms and 2 to 5 nitrogen atoms at from 100 to 130 ° C, with or without removal of the water of reaction,

b) the reaction product is alkoxylated with from 1 to 200 moles of ethylene oxide, propylene oxide or 1,2-butylene oxide per mole of the polyamine, in the presence of an alkaline catalyst at from 110 to 140 ° C and

c) some or all of the basic tertiary nitrogen atoms of the alkoxylate are alkylated.

6. An alkoxylated amido-containing polyamine which can be prepared as claimed in claim 5.

7. Use of an alkoxylated amido-containing polyamine, obtainable by condensing a dicarboxylic acid of 3 to 20 carbon atoms or one of its functional derivatives with a polyalkylenepolyamine having 2 or more carbon atoms and 2 or more amino groups and by reacting the reaction product with a total of from 1 to 200 moles of ethylene oxide or propylene oxide or 1,2-butylene oxide per mole of polyalkylenepolyamine, as an oil demulsifier.

8. Use of an alkoxylated amido-containing polyamine as claimed in claim 7, obtainable by condensing a dicarboxylic acid of the formula

$$HOOC-R-COOH \qquad I$$

where $R^1$ is a divalent radical of an alkane or alkene of 1 to 17 carbon atoms or an unsubstituted or substituted phenylene radical, with a polyalkylenepolyamine of the formula

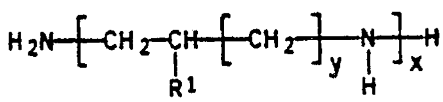

where $R^1$ is hydrogen or methyl, y is 0 or 1 and x is from 2 to 5, as an oil demulsifier.

9. Use of an alkoxylated amido-containing polyamine as claimed in claim 7, in which some or all of the basic tertiary nitrogen atoms are alkylated, as an oil demulsifier.

## Revendications

1. Polyamines oxalkylées contenant des groupements amide, convenant comme émulsionnants pour pétrole brut, pouvant être obtenues par condensation d'acides dicarboxyliques à 3-20 atomes de carbone ou de dérivés fonctionnels de ceux-ci avec des polyalkylène-polyamines contenant au mains 4 atomes de carbone et au moins 3 groupements amino, et par mise en réaction du produit réactionnel avec au total 1 à 200 moles d'oxyde d'ethylène et/ou d'oxyde de propyléne et/ou d'oxyde de 1,2-butyléne par mole de polyalkylène-polyamine.

2. Polyamines oxalkylées contenant des groupements amide selon la revendication 1, pouvant être obtenues par condensation d'acides dicarboxyliques de formule

$$HOOC-R-COOH \qquad I$$

dans laquelle R représente le reste bivalent d'un alcane ou d'un alcène à 1-17 atomes de carbone ou un reste phénylène éventuellement substitué, avec des polyalkyléne-polyamines de formule

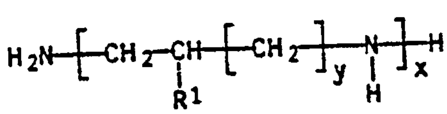

dans laquelle $R^1$ représente un atome d'hydrogène ou un radical méthyle, y a la valeur 1 ou 0 et x a une valeur de 2 à 5.

3. Polyamines oxalkylées contenant des groupements amide selon la revendication 1, dans lesquelles les atomes d'azote tertiaire basique sont partiellement ou complètement alkylés.

4. Procédé de préparation de polyamines oxalkylées contenant des groupements amide selon la revendication 1, caractérisé en ce que
   a) on condense des acides dicarboxyliques à 3-20 atomes de carbone ou des dérivés fonctionnels de ceux-ci avec des polyamines à 4-20 atomes de carbone et à 3-5 atomes d'azote, à une température de 100 à 300 °C, éventuellement avec élimination de l'eau de réaction,
   b) on alcoxyle le produit réactionnel avec 1 à 200 moles d'oxyde d'éthylène, d'oxyde de propylène ou d'oxyde de l,2-butylène pour 1 mole de la polyamine, en présence de catalyseurs alcalins à des températures de 110 à 140 °Ç, et éventuellement
   c) on alkyle partieldemet ou complètement les atomes d'azote tertiaire basique des alcoxylates.

5. Procédé de préparation de polyamines oxalkylées contenant des groupements amide, caractérisé en ce que
   a) on condense des acides dicarboxyliques à 3-20 atomes de carbone ou des dérivés fonctionnels de ceux-ci avec des polyamines à 2-20 atomes de carbone et à 2-5 atomes d'azote, à une température de 100 à 300 °C, éventuellement avec élimination de l'eau de réaction,
   b) on alcoxyle le produit réactionnel avec 1 à 200 moles d'oxyde d'éthylène, d'oxyde de propylène ou d'oxyde de 1,2-butylène pour 1 mole de la polyamine, en présence de catalyseurs alcalins à des températures de 110 à 140 °C, et
   c) on alkyle partiellemet ou complètement les atomes d'azote tertiaire basique des alcoxylates.

6. Polyamines oxalkylées contenant des groupements amide préparables selon la revendication 5.

7. Utilisation, comme émulsionnants pour pétrole brut, de polyamines oxalkylées contenant des groupements amide, pouvant être obtenues par condensation d'acides dicarboxyliques à 3-20 atomes de carbone ou de dérivés fonctionnels de ceux-ci avec des polyalkylène-polyamines contenant au moins 2 atomes de carbone et au moins 2 groupements amino, et par mise en réaction du produit réactionnel avec au total 1 a 200 moles d'oxyde d'éthylène et/ou d'oxyde de propylène et/ou d'oxyde de l,2-butylène par mole de polyalkylène-polyamine.

8. Utilisation, comme émulsionnants pour pétrole brut, de polyamines oxalkylées contenant des groupements amide selon la revendication 7, pouvant être obtenues par condensation d'acides dicarboxyliques de formule

$$HOOC-R-COOH \qquad I$$

dans laquelle R représente le reste bivalent d'un alcane ou d'un alcène à 1-17 atomes de carbone ou un reste phénylène éventuellement substitué, avec des polyalkylène-polyamines de formule

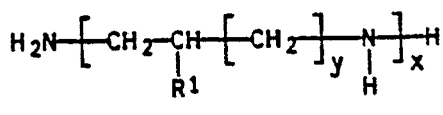

dans laquelle $R^1$ représente un atome d'hydrogène ou un radical méthyle, y a la valeur 1 ou 0 et x a une valeur de 2 à 5.

9. Utilisation, comme émulsionnants pour pétrole brut, de polyamines oxalkylées contenant des groupements amide selon la revendication 7, dans lesquelles les atomes d'azote tertiaire basique sont partiellement ou complètement alkylés.